# EUROPÄISCHE PATENTSCHRIFT

(11) **EP 2 252 475 B1**
(45) Veröffentlichungstag und Bekanntmachung des Hinweises auf die Patenterteilung: **04.07.2012**
(21) Anmeldenummer: 09717263.9
(22) Anmeldetag: 16.01.2009
(51) Int. Cl.: B60K 5/12

(54) **VORRICHTUNG ZUM ELASTISCHEN LAGERN EINER MOTORGETRIEBEEINHEIT**
DEVICE FOR ELASTICALLY MOUNTING AN ENGINE TRANSMISSION UNIT
DISPOSITIF DE FIXATION ÉLASTIQUE D'UN GROUPE MOTEUR-BOÎTE DE VITESSES

(30) Priorität: 04.03.2008 DE 202008003072 U
(43) Veröffentlichungstag der Anmeldung: 24.11.2010
(73) Patentinhaber: Anvis Deutschland GmbH, 36396 Steinau an der Strasse (DE)
(72) Erfinder: PICHEL, Heiko, 36396 Steinau (DE); KARUS, Eyk, 63626 Bad Soden-Salmünster (DE); WEISSBECKER, Jürgen, 63626 Bad Soden-Salmünster (DE)
(74) Vertreter: Schmid, Nils T.F.
(86) Internationale Anmeldenummer: PCT/EP2009/000264
(87) Internationale Veröffentlichungsnummer: WO 2009/109261

(56) Entgegenhaltungen:
- EP-A- 0 520 881
- WO-A-2006/054336
- US-A1- 2002 014 727

## Beschreibung

Es ist bekannt, die Motorgetriebeeinheit über elastische Lager an die Fahrzeugkarosserie anzubinden. Ein derartiges elastisches Lager hat einen an die Motorgetriebeeinheit starr befestigten Träger und einen an die Fahrzeugkarosserie starr befestigbaren Flansch. Üblicherweise ist der Flansch in Form einer Brücke geformt, die sich hauptsächlich in Längs- und Vertikalrichtung erstreckt und dabei den Träger teilweise in Längsrichtung übergreift. Der Flansch wird üblicherweise in Kraftfahrzeuglängsrichtung montiert und ist demnach im wesentlichen in Fahrtrichtung des Fahrzeugs ausgerichtet. Der Träger hingegen erstreckt sich in Querrichtung von dem Flansch weg und definiert einen Montagebereich, an dem die Motorgetriebeeinheit fest anzubinden ist und der sich aus dem brückenartigen Flansch in Querrichtung heraus erstreckt, um für eine in Vertikalrichtung freie Zugänglichkeit bei dem Aufsetzen der Motorgetriebeeinheit auf den Montagebereich zu sorgen.

Der Elastomerkörper eines bekannten elastischen Lagers dient dazu, den Träger elastisch an dem Flansch abzustützen. Bekanntermaßen hat der Elastomerkörper eine vertikale Tragfeder, welche im wesentlichen eine statische, zur Längs- und Querrichtung des Kraftfahrzeugs vertikal wirkende Gewichtslast der Motorgetriebeeinheit aufnimmt. Die Vertikalfeder ist üblicherweise hülsenförmig ausgebildet, um eine Abstützung in Quer- und Längsrichtung gleichmäßig zu realisieren.

Für eine vertikale Begrenzung der Relativbewegung zwischen dem Träger und dem Flansch sind separat vulkanisierte Anschläge an dem Träger und am Flansch vorgesehen. Die Elastomeranschläge wirken beispielsweise mit der Innenseite des brückenförmigen Flansches zusammen. Außerdem hat das bekannte elastische Lager einen außerhalb des brückenförmigen Flansches liegenden, sich in Längsrichtung erstreckenden elastischen Anschlagswulst, der an dem Träger befestigt ist und eine Bewegungsamplitude des Flansches in Querrichtung beschränkt.

Das bekannte elastische Lager wird insbesondere dazu eingesetzt, eine quer zur Fahrtrichtung eingebaute Motorgetriebeeinheit an der Kraftfahrzeugkarosserie elastisch anzubinden. Das bekannte elastische Lager ist teuer in der Herstellung, weil für die unterschiedlichen Funktionen des Elastomerkörpers, nämlich Anschlag, Tragfeder, etc., jeweils separate Elastomerabschnitte zu vulkanisieren und entsprechende Werkzeugformen zu gestalten sind. Des weiteren besitzt das bekannte elastische Lager eine in Vertikalrichtung ausgedehnte Abmessung, die einen erheblichen Teil des üblicherweise sehr begrenzten Motorraums beansprucht.

Eine solche lagervorrichtung ist Z.B. durch EP0520881 bekannt.

Es ist Aufgabe der Erfindung, die Nachteile des Stands der Technik zu überwinden, insbesondere eine Vorrichtung zum elastischen Lagern einer Motorgetriebeeinheit an eine Kraftfahrzeugkarosserie bereitzustellen, mit der eine kostengünstige Herstellung unter Vereinfachung des Elastomerkörperaufbaus bei geringer vertikaler Bauhöhe bereitgestellt ist.

Diese Aufgabe wird durch die Merkmale von Anspruch 1 gelöst. Danach ist eine Vorrichtung zum elastischen Lagern einer Motorgetriebeeinheit an einer Kraftfahrzeugkarosserie mit einem an die Motorgetriebeeinheit befestigbaren, starren Träger versehen. Des weiteren umfaßt das elastische Lager einen an die Kraftfahrzeugkarosserie befestigbaren, starren Flansch, der eine horizontale, insbesondere in Fahrtrichtung auszurichtende, Längsrichtung definiert, und einen Elastomerkörper, über den sich der Träger an dem Flansch elastisch abstützt und der eine Vertikalfeder zum Aufnehmen einer im wesentlichen vertikal wirkenden, zur Längsrichtung und einer horizontalen Querrichtung im wesentlichen senkrecht wirkenden Gewichtslast der Motorgetriebeeinheit aufweist. Dabei erstreckt sich der Träger von dem Flansch zumindest in Querrichtung weg und hat einen in Querrichtung zum Flansch versetzten Montagebereich sowie einen Kopplungsabschnitt, der durch eine durch den Flansch gebildete Öffnung im wesentlichen vertikal hindurch derart ragt, daß der Kopplungsabschnitt einen Anschlag zum Begrenzen einer elastischen Relativbewegung zwischen dem Träger und dem Flansch in beiden Vertikalrichtungen bildet. Vorzugsweise trägt der Flansch Elastomermaterial zur Bildung des dämpfenden Anschlags, wobei der Träger frei von anvulkanisiertem Elastomermaterial ausgebildet sein kann. Es sei klar, daß durch die erfindungsgemäße Ausbildung des sich durch die Flanschöffnung ragenden Kopplungsabschnitt nicht nur eine Anschlagsfunktion für eine Relativbewegung in den Vertikalrichtungen geschaffen ist, sondern auch auf einfache Weise in sämtliche Horizontalrichtungen. Somit ist eine Begrenzung der Bewegungsamplitude in allen drei Raumrichtungen durch die erfindungsgemäße Ausbildung des Trägers und des Flansches sichergestellt.

Mit dem erfindungsgemäßen Motorgetriebelager kann ein kostenoptimiertes getriebeseitiges Feststofflager geschaffen werden, bei dem eine Dreipunktlagerung eines quer gebauten Motors bereitgestellt wird. Das erfindungsgemäße Motorgetriebelager ist insofern kostengünstig, als alle Elastomerteile auf einem einteilig gefertigten Tragfederkörper auch unter Bereitstellung der Elastomeranschläge realisiert sind. Die Einbeziehung der Anschlagsfunktion in den vertikalen Tragfederkörper kann erreicht werden, ohne die Steifigkeit der Tragfeder zu beeinflussen.

Bei einer Weiterbildung der Erfindung rahmt der Kopplungsabschnitt einen die Öffnung des Flansches begrenzenden Rand, insbesondere zwei sich diametral gegenüberliegende, die Öffnung des Flansches begrenzende Randabschnitte, in Längsrichtung oder vorzugsweise in Querrichtung zumindest teilweise mit Abstand ein. Der Abstand definiert die Bewegungsfreiheit zwischen Träger und Flansch und legt die Relativbewegungsamplitude fest.

Vorzugsweise ist der Anschlag durch ein der Kraftfahrzeugkarosserie zugewandtes, unteres Profilteil und ein von der Kraftfahrzeugkarosserie abgewandtes, oberes, an dem unteren Profilteil befestigtes Profilteil gebildet. Dabei kann das obere und untere Profilteil im wesentlichen ein I-Profil bilden. Die im wesentlichen horizontalen Endschenkel des I-Profils können Anschlagflächen definieren. Es sei klar, daß die Mittelsäule des I-Profils als "H" geformt sein kann, wobei sich die Endschenkel von der vertikalen, parallelen Hauptsäule der H-Form weg erstrecken.

Vorzugsweise sind das obere und das untere Profilteil separate Bauteile, insbesondere Blechteile, die aneinander befestigt, insbesondere miteinander verschraubt, sind.

Bei einer bevorzugten Ausführung der Erfindung sind das obere und das untere Profilteil frei von anvulkanisiertem Elastomermaterial. Die Tragfeder und die Anschläge stützen sich flanschseitig an einem Zwischenteil ab, das an dem oberen und unteren Profilteil befestigt ist. Die dadurch erreichte elastomerfreie Ausbildung des oberen und unteren Profilteils läßt ohne weiteres eine Demontage und ein Entfernen des Trägers von der erfindungsgemäßen Motorgetriebelagerung zu. Vorzugsweise stützt sich der Elastomerkörper trägerseitig an dem Zwischenteil ab, das zwischen dem oberen und unteren Profilteil angeordnet und daran befestigt ist. Das Zwischenteil kann ein Stützblech sein. Gegen das Stützteil stützt sich der Elastomerkörper trägerseitig insbesondere ausschließlich ab.

Vorteilhafterweise hat das Stützteil zwei Stützabschnitte, die zur Horizontalen geneigt sind. Die Horizontale definiert sich durch die Ebene, zu der die Lotrechte in Vertikalrichtung steht. An den Stützabschnitten stützt sich jeweils ein Federarm des Elastomerkörpers ab. Die Federarme spreizen sich von dem Stützteil ab und bilden teilweise ein umgedrehtes V.

Vorteilhafterweise erstrecken sich die Stützabschnitte des Stützteils von einer Befestigungsmitte, die als Platte ausgeführt sein kann, im wesentlichen in Längsrichtung voneinander weg.

Bei einer Weiterbildung der Erfindung hat der Flansch jeweils eine Stützfläche für die Federarme, wobei die jeweilige Stützfläche entsprechend der Neigung eines zugeordneten Stützabschnitts des Zwischenteils geneigt ist.

Bei einer Weiterbildung der Erfindung hat der Flansch einen die Öffnung begrenzenden Ringkörper mit zwei Montagefüßen zum Befestigen an die Kraftfahrzeugkarosserie und zwei die Montagefüße miteinander verbindenden Längsstreben, die sich in Längsrichtung zwischen dem oberen und unteren Profilteil vorbei erstrecken und den Anschlag für eine Vertikalbewegung nach oben und unten in Funktionsunion bilden.

Für einen weichen Anschlag sind die Längsstreben zumindest teilweise, vorzugsweise vollständig, von einem Elastomermaterial umgeben.

Bei einer Weiterbildung der Erfindung hat der Elastomerkörper zwei zueinander geneigte Federarme, die sich in Längsrichtung voneinander weg spreizen.

Weitere Eigenschaften, Merkmale und Vorteile der Erfindung werden durch die folgende Beschreibung einer bevorzugten Ausführung der Erfindung anhand der beiliegenden Zeichnungen deutlich, in denen zeigen:
- Figur 1: eine perspektivische Ansicht eines elastischen Lagers für eine Motorgetriebeeinheit;
- Figur 2: eine Untenansicht des elastischen Lagers gemäß Figur 1;
- Figur 3: eine Querschnittsansicht entlang der Schnittlinie III-III gemäß Figur 2; und
- Figur 4: eine Querschnittsansicht entlang der Schnittlinie IV-IV gemäß Figur 2.

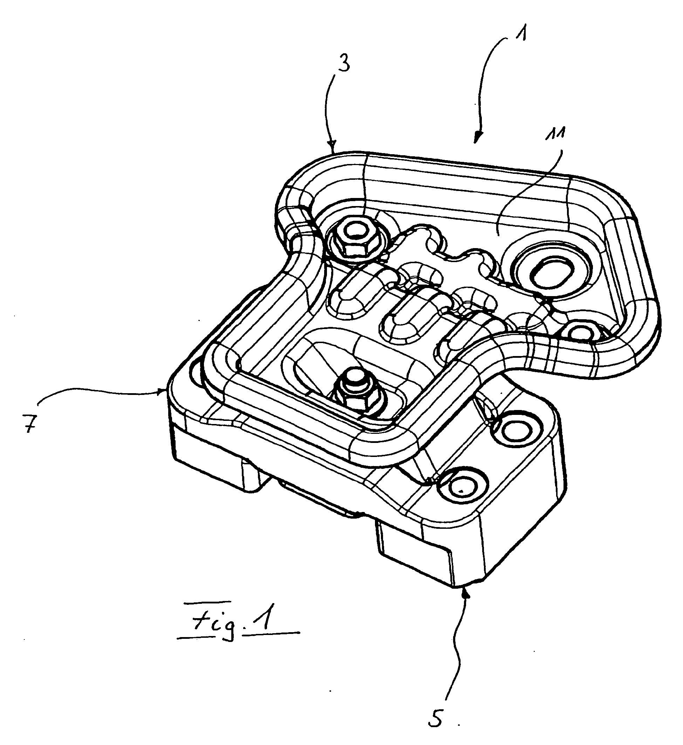

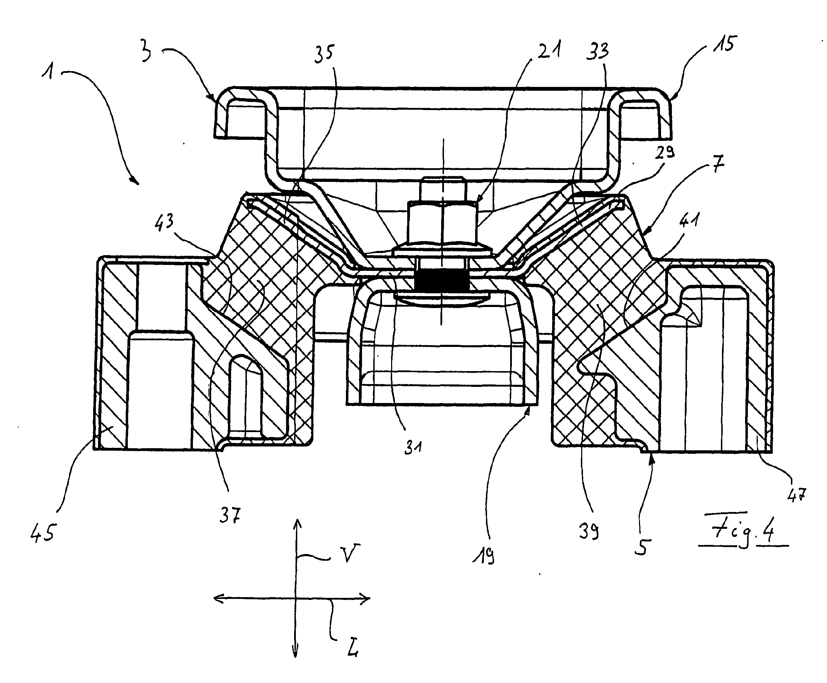

In den Figuren 1 bis 4 ist das erfindungsgemäße elastische Lager zum Tragen einer Motorgetriebeeinheit an einer Kraftfahrzeugkarosserie im allgemeinen mit der Bezugsziffer 1 versehen. Die Motorgetriebeeinheit und die Kraftfahrzeugkarosserie sind in den Figuren nicht dargestellt.

Das elastische Motorgetriebelager 1 besteht im wesentlichen aus drei Hauptkomponenten, nämlich einem Träger 3, an dem das Motorgetriebe befestigbar ist, das vorzugsweise gemäß einem zur Fahrtrichtung senkrechten Quereinbau an der Karosserie gelagert werden soll, einem Flansch 5, der an der Karosserie zu befestigen ist, und einem den Träger 3 mit dem Flansch 5 elastisch koppelnden Elastomerkörper 7.

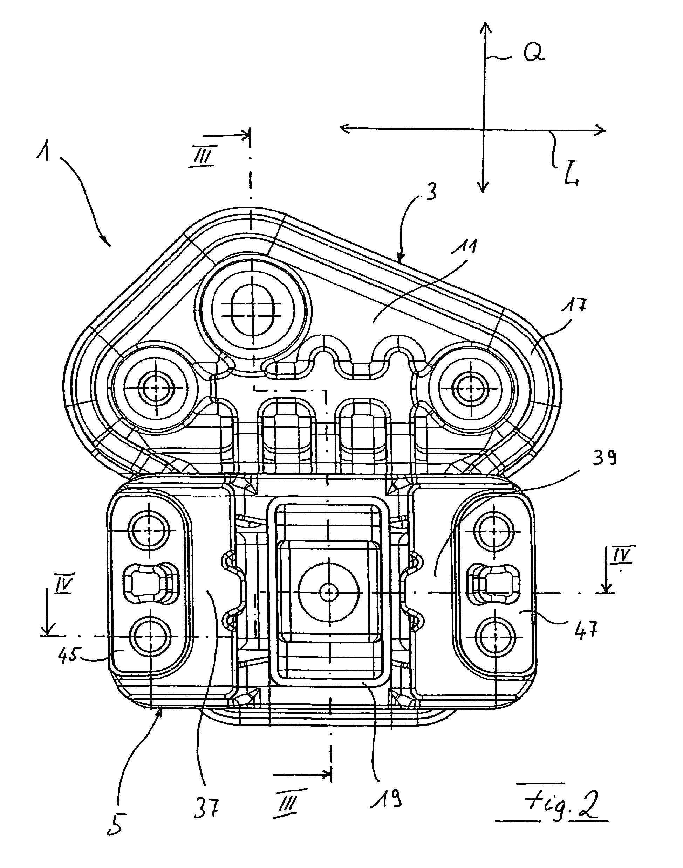

Wie in Figur 1 und 2 ersichtlich ist, hat der Träger 3 eine gestufte Pfeilform, die in eine Querrichtung Q zeigt. Der Träger 3 hat einen im wesentlichen horizontalen Montageabschnitt 11, an dem die Motorgetriebeeinheit 1 befestigbar ist, und einen zum Montageabschnitt 11 in Vertikalrichtung V nach oben versetzten im wesentlichen horizontalen Kopplungsabschnitt 13, an dem der Flansch 5 über den Elastomerkörper 7 an dem Träger 3 gekoppelt ist. Der Montageabschnitt 11 erstreckt sich von dem Kopplungsabschnitt 13 in Querrichtung Q von der Motorgetriebeeinheit 1 weg, so daß der Montageabschnitt 11 für die Befestigung der Motorgetriebeeinheit 1 in Vertikalrichtung von oben frei zugänglich ist.

Der Träger 3 ist durch ein erstes oberes, der Karosserie abzuwendendes Profilteil 15, das den Kopplungsabschnitt 13 und den Montageabschnitt 11 bildet und dessen Rand durch eine Bördelung 17 verstärkt ist, und durch ein unteres, der Karosserie zuzuwendendes Profilteil 19 gebildet. Das obere Profilteil 15 sowie das untere Profilteil 19 sind aneinander mit Hilfe einer Schraubenmutteranordnung 21 befestigt. Der Kopplungsabschnitt 13 des oberen Profilteils 15 und das untere Profilteil 19 bilden im Querschnitt Q im wesentlichen ein 1-Profil mit horizontalen Endschenkeln 23a-d.

Beide Profilteile 15, 19 haben aneinander liegende, horizontale Mittelplatten 25, 27 zwischen denen ein Zwischenblech 29 eingespannt ist. Das Zwischenblech 29 hat zwei sich von einer eingeklemmten Mitte in Längsrichtung L erstreckende Stützarme 33, 35, die gegenüber einer durch die Querrichtung Q und Längsrichtung L definierten Horizontale in einem Winkel von etwa 30°C geneigt sind. An den Stützarmen 33, 35 stützen sich trägerseitig zwei voneinander weg spreizend Federarme 37, 39 ab. Flanschseitig stützen sich die Federarme 37, 39 direkt an einer entsprechend der Neigung der Stützarme 33, 35 geneigten Stützfläche 41, 43 des Flansches 5 ab.

Dabei ist das obere Profilteil 15 vollständig frei von daran anvulkanisiertem Elastomermaterial des Elastomerkörpers 7. Die Federkräfte werden trägerseitig ausschließlich über das Zwischenblech 29 und die Schraubenmutteranordnung 21 in den Träger 3 übertragen. Damit ist der Träger 3 samt oberem und unterem Profilteil 15, 19 frei von Elastomermaterial gebildet und ohne weiteres von dem Lager 1 demontier- und austauschbar.

Der Flansch 5 hat eine ringförmige Rechteck-Struktur mit zwei sich in Längsrichtung L gegenüberliegenden Montagefüßen 45, 47, an denen Bohrungen für entsprechende Befestigungsschrauben (nicht dargestellt) eingebracht sind. An den Montagefüßen 45, 47 greifen die Federarme 37, 39 im wesentlichen lotrecht zu den Abstützflächen 41, 43 an.

Zur Bildung der ringförmigen Struktur des Flansches 5 sind die beiden Montagefüße 45, 47 durch Längsstreben 49, 51 miteinander verbunden. Die Montagefüße 45, 47 und die Längsstreben 49, 51 sind aus einem Stück gefertigt.

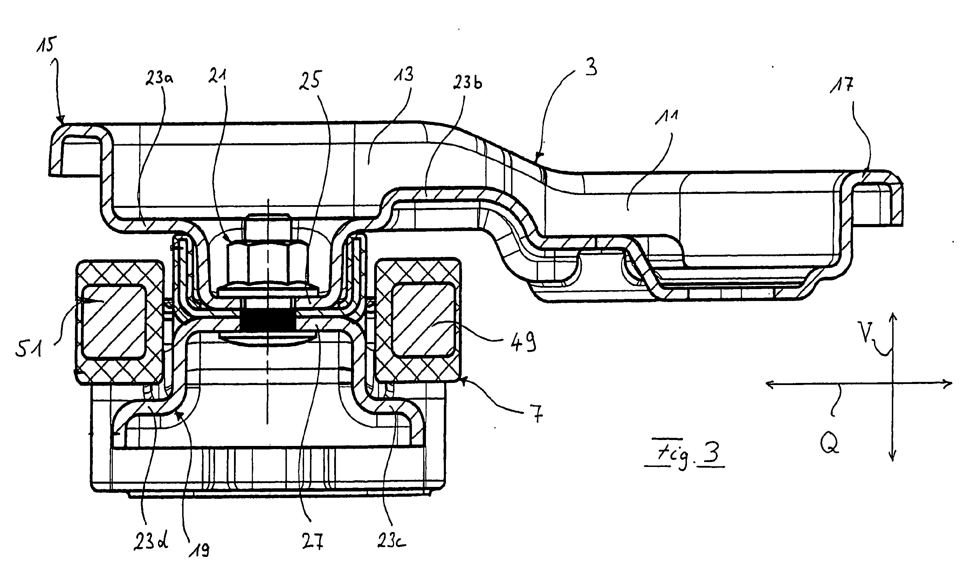

Wie in Figur 3 ersichtlich ist, sind die Längsstreben 49, 51 vollständig in einem Elastomermaterial eingebettet, wobei die oberen und unteren Horizontalflächen mit einer starken Elastomerschicht zur Bildung einer Anschlagsfunktion mit den Endschenkeln 23a-d versehen sind.

Wie ebenfalls in Figur 3 ersichtlich ist, umgreifen das obere Profilteil 15 und das untere Profilteil 19 des Träges 3 die Längsstreben 49, 51 in Querrichtung Q zumindest teilweise, so daß eine Relativwegbegrenzung durch Anschlag der horizontalen I-Profilendschenkel 23a-d mit der jeweiligen Längsstrebe 49, 51 in beide Vertikalrichtungen V begrenzt ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: elastisches Motorgetriebelager
- 3: Träger
- 5: Flansch
- 7: Elastomerkörper
- 11: Montageabschnitt
- 13: Kopplungsabschnitt
- 15: oberes Profilteil
- 17: Bördelung
- 19: unteres Profilteil
- 21: Schraubenmutteranordnung
- 23a-d: horizontale Endschenkel
- 25,27: Mittelplatten
- 29: Zwischenblech
- 33,35: Stützarme
- 37,39: Federarme
- 41,43: Stützfläche
- 45,47: Montagefüße
- 49, 51: Längsstreben
- L: Längsrichtung
- Q: Querrichtung
- V: Vertikalrichtung

## Patentansprüche

1. Vorrichtung zum elastischen Lagern einer Motorgetriebeeinheit an einer Kraftfahrzeugkarosserie, umfassend einen an die Motorgetriebeeinheit befestigbaren, starren Träger (3), einen an die Kraftfahrzeugkarosserie befestigbaren, starren Flansch (5), der eine horizontale, insbesondere in Fahrtrichtung auszurichtende Längsrichtung (L) aufweist, und einen Elastomerkörper (7), über den sich der Träger (3) an dem Flansch (5) elastisch abstützt und der eine Vertikalfeder zum Aufnehmen einer im wesentlichen vertikal wirkenden, zur Längsrichtung (L) und zu einer horizontalen Querrichtung (Q) im wesentlichen senkrecht wirkenden Gewichtslast der Motorgetriebeeinheit aufweist, wobei sich der Träger (3) von dem Flansch (5) in Querrichtung (Q) weg erstreckt und einen in Querrichtung (Q) zum Flansch (5) versetzten Montagebereich (11) sowie einen Kopplungsabschnitt (13) aufweist, der durch eine durch den Flansch (5) gebildete Öffnung im wesentlichen vertikal hindurch derart ragt, daß der Kopplungsabschnitt (13) einen Anschlag zum Begrenzen einer elastischen Relativbewegung zwischen dem Träger (3) und dem Flansch (5) in beiden Vertikalrichtungen (V) bildet.

2. Vorrichtung nach Anspruch 1, bei der der Kopplungsabschnitt (13) einen die Öffnung des Flansches (5) begrenzenden Rand, insbesondere zwei sich diametral gegenüberliegende die Öffnung des Flansches (5) begrenzende Randabschnitte, in Längsrichtung (L) oder vorzugsweise in Querrichtung (Q) zumindest teilweise mit Abstand einrahmt, der eine Relativbewegungsamplitude zwischen dem Träger (3) und dem Flansch (5) definiert.

3. Vorrichtung nach Anspruch 1 oder 2, bei der der Anschlag durch ein der Kraftfahrzeugkarosserie zugewandtes, unteres Profilteil (19) und ein von der Kraftfahrzeugkarosserie abgewandtes, oberes, an dem unteren Profilteil (19) befestigtes Profilteil (15) gebildet ist.

4. Vorrichtung nach Anspruch 3, bei der das obere und untere Profilteil (15, 19) im wesentlichen ein 1-Profil bilden, wobei die im wesentlichen horizontalen Endschenkel (23a-d) des I-Profils Anschlagflächen definieren.

5. Vorrichtung nach Anspruch 3 oder 4, bei der das obere und untere Profilteil (15, 19) separate Bauteile, insbesondere Blechteile, sind, die aneinander befestigt insbesondere miteinander verschraubt sind.

6. Vorrichtung nach einem der Ansprüche 3 bis 5, bei der das obere und untere Profilteil (15, 19) frei von anvulkanisiertem Elastomermaterial sind.

7. Vorrichtung nach einem der Ansprüche 3 bis 6, bei der zwischen dem oberen und unteren Profilteil (15, 19) ein Stützteil, insbesondere ein Stützblech, an dem Träger (3) befestigt ist, gegen welches Stützteil sich der Elastomerkörper (7), insbesondere ausschließlich, trägerseitig abstützt.

8. Vorrichtung nach Anspruch 7, bei der das Stützteil zwei Stützabschnitte aufweist, die zur Horizontalen geneigt sind und an denen sich jeweils ein Federarm (37, 39) des Elastomerkörpers (7) trägerseitig abstützt.

9. Vorrichtung nach Anspruch 8, bei der sich die Stützabschnitte von einer Befestigungsmitte im wesentlichen in Längsrichtung (L) von einander weg erstrecken.

10. Vorrichtung nach Anspruch 8 oder 9, bei der der Flansch (5) jeweils eine Stützfläche (41, 43) für die Federarme (37, 39) aufweist, wobei die jeweilige Stützfläche (41, 43) entsprechend der Neigung des Stützabschnitts geneigt ist.

11. Vorrichtung nach einem der vorstehenden Ansprüche, bei der der Flansch (5) einen die Öffnung begrenzenden Ringkörper mit zwei Montagefüßen (45, 47) zum Befestigen an die Kraftfahrzeugkarosserie und zwei die Montagefüße (45, 47) mit einander verbindenden Längsstreben (49, 51) umfasst, die sich in Längsrichtung (L) zwischen dem oberen und unteren Profilteil (15, 19) vorbei erstrecken.

12. Vorrichtung nach einem der vorstehenden Ansprüche, bei der die Längsstreben (49, 51) zumindest teilweise von Elastomermaterial umgeben sind.

13. Vorrichtung nach einem der vorstehenden Ansprüche, bei der der Elastomerkörper (7) zwei zueinander geneigte Federarme (37, 39) aufweist, die sich in Längsrichtung (L) von einander wegspreizen.

14. Anordnung umfassend eine Motorgetriebeeinheit, eine Kraftfahrzeugkarosserie mit einer Längsrichtung (L) und einer Querrichtung (Q) und einer nach einem der vorangegangenen Ansprüche ausgebildeten Vorrichtung.

## Claims

1. Device for elastically supporting an engine-gear unit at a motor vehicle body, the device comprising a rigid support member (3) attachable to the engine-gear unit, a rigid flange (5) attachable to the motor vehicle body and having a horizontal, longitudinal direction (L) to be aligned in particular with the driving direction of the vehicle, and an elastomeric body (7) via which the support member (3) elastically rests on the flange (5) and which has a vertical spring for receiving a weight load of the engine-gear unit, the load acting essentially vertically and acting essentially perpendicularly to the longitudinal direction (L) as well as to a horizontal, transverse direction (Q), wherein the support member (3) is extending away from the flange (5) in transverse direction (Q) and has a mounting area (11), off-set in transverse direction (Q) with respect to the flange (5), as well as a coupling section (13) projecting essentially vertically through an opening formed through the flange (5) such that the coupling section (13) forms an abutment for restricting a relative movement between the support member (3) and the flange (5) in both vertical directions (V).

2. Device according to claim 1, wherein the coupling section (13) at least partially forms a frame at a distance and in longitudinal direction (L) or preferably in transverse direction (Q) around a rim delimiting the opening of the flange (5), in particular two rim sections that delimit the opening of the flange (5) and oppose each other, which distance defines the amplitude of the relative movement between the support member (3) and the flange (5).

3. Device according to claim 1 or 2, wherein the abutment is formed by a lower profile part (19), facing the motor vehicle body, and an upper profile part (15), facing away from the motor vehicle body and being attached to the lower profile part (19).

4. Device according to claim 3, wherein the upper and the lower profile part (15, 19) essentially form an I-profile, wherein the essentially horizontal end legs of the I-profile (23a-d) define abutment surfaces.

5. Device according to claim 3 or 4, wherein the upper and the lower profile parts (15, 19) are separated components, in particular sheet steel components attached to each other, in particular bolted together.

6. Device according to claims 3 to 5, wherein the upper and the lower profile parts (15, 19) are free of elastomer material attached by vulcanisation.

7. Device according to claims 3 to 6, wherein between the upper and lower profile part (15, 19) a support element, in particular a metal support plate is attached to the support member (3), against which support element the elastomeric body (7) rests in particular exclusively at the side facing the support member.

8. Device according to claim 7, wherein the support element has two support sections that are inclined with respect to the horizontal and at which respectively rests one spring arm (37, 39) of the elastomeric body (7) at the side facing the support member.

9. Device according to claim 8, wherein the support sections extend essentially in longitudinal direction (L) away from a centre of attachment.

10. Device according to claims 8 or 9, wherein the flange (5) has one support surface (41, 43) for each of the spring arms (37, 39), wherein the respective support surface (41, 43) is inclined corresponding to the inclination of the support section.

11. Device according to one of the preceding claims, wherein the flange (5) comprises a ring body delimiting the opening and having two mounting bases (45, 47) for attachment at the motor vehicle body and also comprises two longitudinal struts (49, 51) connecting the mounting bases (45, 47) and extending in longitudinal direction (L) between the upper and lower profile parts (15, 19), passing the latter.

12. Device according to one of the preceding claims, wherein the longitudinal struts (49, 51) are at least partially surrounded by elastomer material.

13. Device according to one of the preceding claims, wherein the elastomeric body (7) has two spring arms (37, 39), inclined with respect to each other and extending away from each other in longitudinal direction (L).

14. Arrangement comprising an engine gear unit, a motor vehicle body with a longitudinal direction (L) and a transverse direction (Q) and a device formed according to one of the preceding claims.

## Revendications

1. Dispositif pour supporter élastiquement un ensemble moteur - boite de vitesses par rapport à une carrosserie de véhicule automobile, comprenant un support (3) rigide et attachable à l'ensemble moteur - boite de vitesses, une bride (5) rigide et attachable à la carrosserie du véhicule moteur, la bride (5) comportant une direction longitudinale (L) horizontale, à être alignée notamment en direction de conduite, et un corps élastomère (7) par lequel le support (3) s'appuie élastiquement à la bride (5), le corps élastomère comportant un ressort vertical pour recevoir la charge du poids de l'ensemble moteur-boite de vitesses qui agi essentiellement verticalement et essentiellement perpendiculairement à la direction longitudinale (L) et à une direction latérale (Q) horizontale, dans lequel le support (3) s'étend de la bride (5) en s'éloignant de celle-ci en direction latérale (Q) et comporte une zone de montage (11), décalée par rapport à la bride (5) en direction latérale (Q), ainsi qu'une section de couplage (13), qui s'étend essentiellement verticalement à travers d'une ouverture formée par la bride (5) de façon que la section de couplage (13) forme une butée pour limiter un mouvement élastique relatif entre le support (3) et la bride (5) dans les deux directions verticales (V).

2. Dispositif selon la revendication 1, dans lequel la section de couplage (13) au moins partiellement encadre avec un écart en direction longitudinale (L) ou préférablement en direction latérale (Q) une bordure qui délimite l'ouverture de la bride (5), notamment deux sections de bordure disposées diamétralement face à face et délimitant l'ouverture de la bride (5), l'écart définissant une amplitude de mouvement relatif entre le support (3) et la bride (5).

3. Dispositif selon la revendication 1 ou 2, dans lequel la buttée est formé par une pièce profilée inférieure (19) faisant face à la carrosserie et par une pièce profilée supérieure (15) du coté opposé de la carrosserie et attachée à la pièce profilée inférieure (19).

4. Dispositif selon la revendication 3, dans lequel les pièces profilées supérieure et inférieure (19,15) forment essentiellement un profile en "I", dans lequel les branches terminales (23a-d) du profile en "I", essentiellement horizontales, définissent des surfaces de butté.

5. Dispositif selon la revendication 3 ou 4, dans lequel les pièces profilées supérieure et inférieure (19,15) sont des composants séparés, notamment des pièces en tôle, qui sont attachés l'un à l'autre, notamment vissés l'un à l'autre.

6. Dispositif selon l'une des revendications 3 à 5 dans lequel les pièces profilées supérieure et inférieure (19,15) sont dépourvues de matière élastomère fixée par vulcanisation.

7. Dispositif selon l'une des revendications 3 à 6 dans lequel entre les pièces profilées supérieure et inférieure (19,15) une pièce d'appui, notamment une tôle d'appui, est attachée au support (3), contre laquelle le corps élastomère (7) s'appuie notamment exclusivement vers le support (3).

8. Dispositif selon la revendication 7, dans lequel la pièce d'appui comporte deux sections d'appui qui sont inclinées vers l'horizontale et auxquelles s'appuie respectivement un bras de ressort (37,39) du corps élastomère vers le support (3).

9. Dispositif selon la revendication 8, dans lequel les sections d'appui s'étendent d'un centre de fixation essentiellement en direction longitudinale (L) en s'éloignant l'un de l'autre.

10. Dispositif selon la revendication 8 ou 9, dans lequel la bride (5) comporte une surface d'appui (41,43) pour chacun des bras de ressort (37,39), la surface d'appui (41,43) respective étant inclinée selon l'inclinaison de la section d'appui.

11. Dispositif selon l'une des revendications précédentes dans lequel la bride (5) comprend d'un part un corps annulaire délimitant l'ouverture et ayant deux pieds de montage (45, 47) pour l'attachement à la carrosserie, et d'autre part deux entretoises longitudinales (49, 51) liant les pieds de montage (45,47) l'un avec l'autre et s'étendant en direction longitudinale (L) en passant entre les pièces profilées supérieure et inférieure (19,15).

12. Dispositif selon l'une des revendications précédentes dans lequel les entretoises longitudinales (49,51) sont au moins partiellement entourées par de la matière élastomère.

13. Dispositif selon l'une des revendications précédentes dans lequel le corps élastomère (7) comporte deux bras de ressort (37, 39) qui sont inclinées l'un par rapport l'autre et qui s'écartent l'un de l'autre en direction longitudinale (L).

14. Arrangement comprenant un ensemble moteur - boite de vitesses, une carrosserie de véhicule automobile avec une direction longitudinale (L) et une direction latérale (Q) et un dispositif formé selon l'une des revendications précédentes.
